# EUROPEAN PATENT SPECIFICATION

(11) **EP 3 420 400 B1**
(45) Date of publication and mention of the grant of the patent: **11.12.2019**
(21) Application number: 17714265.0
(22) Date of filing: 17.02.2017
(51) Int. Cl.: G02C 5/00, B29D 12/02

(54) **PROCESS FOR OBTAINING AT LEAST ONE COMPONENT OF A GLASSES FRAME MADE AT LEAST OF STONE MATERIAL AND AN EMBEDDED CORE AND CORRESPONDING GLASSES FRAME OF COMPOSITE STONE MATERIAL**
VERFAHREN ZUR HERSTELLUNG MINDESTENS EINES BAUTEILS AUS EINEM BRILLENGESTELL AUS MINDESTENS STEINMATERIAL UND EINEM EINGEBETTETEN KERN UND ENTSPRECHENDER BRILLENRAHMEN AUS VERBUNDSTEINMATERIAL
PROCESSUS POUR OBTENIR AU MOINS UN ÉLÉMENT D'UNE MONTURE DE LUNETTES COMPOSÉ AU MOINS DE PIERRE ET D'UN NOYAU INTÉGRÉ, ET MONTURE DE LUNETTES CORRESPONDANTE EN MATÉRIAU DE PIERRE COMPOSITE

(30) Priority: 26.02.2016 IT UB20161065
(43) Date of publication of application: 02.01.2019
(73) Proprietor: Budri SpA, 41037 Mirandola (MO) (IT)
(72) Inventor: BUDRI, Gianmarco, 41030 San Prospero (MO) (IT)
(74) Representative: Spagnolo, Chiara
(86) International application number: PCT/IB2017/000136
(87) International publication number: WO 2017/144964

(56) References cited:
- WO-A1-2014/122610
- DE-A1- 4 423 311
- Anonymous: "Standing warm against the cold: Skylark wood-stone glasses from Rolf | EYE WEAR GLASSES", , 7 May 2012 (2012-05-07), XP055119253, Retrieved from the Internet: URL:http://www.eye-wear-glasses.com/2012/0 5/standing-warm-against-cold-skylark-wood. html [retrieved on 2014-05-21]
- Anonymous: "ROLF Steinbrillen - woodstone | wolf meister optik", , 16 January 2013 (2013-01-16), XP055119235, Internet Retrieved from the Internet: URL:http://www.wolf-optik.at/rolf-steinbri llen-woodstone/ [retrieved on 2014-05-21]

## Description

The present invention relates to a process for making at least one component of a glasses frame, such as a front and/or the two temples, of valuable material mainly of stone material integrating a coherent core, and a glasses frame both of the sunglasses type and of the prescription glasses type of composite and stone material, resistant to shocks, stresses and of unexpected lightness.

### Field of the invention

The present invention finds particular although not exclusive application in the eyewear sector and in the industry for eyewear components. In principle, a glasses frame is essentially made up of a front, of suitable dimensions and varied shape, which encloses the rims supporting the lenses connected by a bridge, and a pair of temples. The temples, on the right and left side, are conventionally joined to the front nearly perpendicularly and are foldable to the inside by means of a hinge, each being hinged to some endpieces of the front, where said temple and hinge are of various types and configurations.

The materials, of which glasses frames are made, are the most varied, but conventionally, the vast majority uses cellulose acetate with the addition of plasticizers, stabilizers, dyes, other polymers, which, as known, has excellent - more or less elastic - mechanical characteristics and, due to the fact that it feels good to the touch, the material looks very little like a synthetic product, as for example can be polystyrene or polycarbonate. For example, in the eyewear industry acetate was used to reproduce, from the aesthetic point of view, some natural products like tortoiseshell or wood, finally assuming, however, own structures that no longer imitate the previously used natural products. The main companies of this sector, both as to the manufacturing of semi-finished products and as to the production of glasses, are Italian, although in the latest years, due to the remarkable labour costs, part of these businesses moved to other countries. Other types of material used for making or completing glasses frames or parts thereof were for example wood, horn, carbon fibre, epoxy resin, polyamides, as well as metal, such as titanium, and, finally, stone material. These are materials that allow to make products of good quality, more or less valuable and in compliance with the changing tastes and trends of the moment, however one can reasonably agree on the fact that stone material has found little application or almost no application.

Usually, in this specific context, consumers, since these are accessories that complete personal clothing, although requiring attractiveness in compliance with the taste of the moment, are rather attentive, sensitive and aim at looking for products that may have more and more natural characteristics, that is to say, originated from the processing of materials that are as environmentally friendly as possible. In this respect, the public proved to be particularly interested in materials like wood or horn, all of which are substantially valuable materials with respect to the better known cellulose, and which lend themselves to easy industrial processing, are compatible with the environment and do not pose particular problems for their disposal.

These valuable materials like wood or horn certainly made it possible to make glasses frames particularly attractive and appreciated by the public in consideration of their attention to the environment and, moreover, of aspects that are more strictly related to physical wellbeing. Anyway, a classic example of imposition of a style depending on the material was surely provided by Wolf Meister Optik, a company under the Austrian law, which on its website www.wolf-optik.at proposes, in addition to the classic glasses frames made of laminated wood, some composite frames as well, such as those identified by the distinctive sign Skylark. The latter, as regards their frame front, combine in an original way a part of the structure of laminated wood and a part of stone material, wherein the part of laminated wood remains exposed on the surface facing the inside of the frame, that is to say, on the side facing the user, while the part of stone material is exposed on the visible or external side.

Therefore, it was possible to obtain geometries, for example of the frame front, which allow to limit the fragility of the stone material covering the visible face, in this case of the frame, maintaining the characteristics of lightness and elasticity typical of laminated wood.

### Prior art

A preliminary prior art search in patent literature was performed, which allowed to find some pre-existing solutions that reasonably define the state of the art, and namely:
D1 US6398890 (Spoerle)
D2 WO2014122610 (Budri et al.)
D3 DE8415521 (Giovannini)
D4 ITMO2012A000050 (Gilioli)
D5 CH698924 (Traversi)

In the context of such knowledge, D1 describes a trim part for decorative purposes, especially in the interior, and in this case preferably for the interior trim of the passenger compartments of vehicles, a cover layer of natural stone is applied to the visible side of a base part. For this purpose, the negative shape of the base part is machined from a natural stone block and the two are combined permanently to form a sandwich. Then the surface is machined on the visible side, and finally clear lacquer is applied.
D2 discloses eyeglasses which comprise a base frame forming two lens rims, a bridge and two endpieces, all having an outwardly-facing surface and an inwardly-facing surface, a pair of temples, jointed to the endpieces, wherein at least said outwardly-facing surface of said lens rims and the connecting bridge have a coating made of a stone material. This is a solution substantially resembling that previously observed and identified in Rolf Woodstone.
D3 states that, in order to obtain a decorative or ornamental effect on eyewear, that is to say, on the front part of the metal temples, lacquer or paint was applied in the past. Naturally, this decorative effect was not modifiable upon supply to the public according to the trend of the moment or to the taste of the user of the eyewear. The so presented glasses theoretically had the possibility of being sufficiently equipped with different decorations insertable on the front or on the temples in such a way as to produce and keep in stock various of said decorations from which each purchaser could choose. The object of the invention thus consists of the ornamental jewel effect, which is obtained from an associated ornament on the front part of the temples in such a way as to render the decoration variable.
D4 relates to a coating process for coating ornamental objects made of stone materials, comprising the steps of i) making from a stone material an ornamental object that has a three-dimensional body, which defines a peripheral surface; ii) applying on said peripheral surface a transparent protection coating, chemically and mechanically unalterable; wherein said transparent coating is applied in a continuous way on said peripheral surface, by means of a spraying process or by soaking the product in a specifically prepared bath.
D5, finally, seems comparable with the insert solution proposed in the description of D3, but with a different end use, rather than for eyewear, for the industry of cabins in the automotive sector.

### Drawbacks

The above-mentioned solutions, all of which substantially refer to the latest years, suggest a wide range, underlying the need for companies to meet consumer requirements, of solutions having structures that are at least technically more evolved, but certainly always sensitive to the charm of stone material.

On the other hand, the known solutions described herein do not provide the advantages typical of a product of stone material, they are only additions, where the participation of stone material is objectively minimum, of insignificant impact. Consumers, on the contrary, are rather sensitive to the natural characteristic of marble, which evokes particular value, solidity, cleanliness, and significant aesthetic attractiveness, so the statement that the frames contain this material, even if we repeat that the quantity of stone material is extremely low, seems to be a marketing tool having a certain impact, certainly attracting the attention of the public.

Keeping in mind what has been stated above, when users, however, make their purchasing choices, in view of the evocative power of the stone material, they express strong doubts as, upon handling of the product, they actually realize that the quantity of product used is minimum, and are disappointed.

Furthermore, from the technical point of view, one can reasonably observe that the solutions provided, in which for different reasons there is a participation of stone material, where applied to the eyewear industry, are complex, difficult to achieve and in any case require great manual skills. For example, some of them, due to the fact that they require the layered superimposition of multiple materials, in this case with the layer of stone material visible, can imply the natural detachment or the partial separation of each layer of material, above all of the stone coating that, being of infinitesimal thickness, will tend to get broken. This is also due to the difficult balance to be respected, the frames having to be elastic while maintaining a certain rigidity. This difficult relation is substantially attributable to the fact that in the known solutions the coating of stone material is always present only one side of the frame, conventionally the aesthetic one, which faces outwards, and it is very easy to stress the frame, also inadvertently and for several periods, with the risk of altering its characteristics.

One can also reasonably agree on the fact that, even if one wants to draw inspiration from such technical teachings in transferring the use of said stone material tout court for example in the making of glasses frames, such as a front or a temple, starting from solid stone, both the high purchase cost of the raw material, and the large amount of scrap and, from the technical point of view, the lack of a minimum elasticity, lightness, as well as the conventional processing, would make its application substantially unusable due to the very bad result, without comfort, and the making of said element impracticable and not cost-effective, at the end of the processing cycle there resulting a non-competitive and, in conclusion, unfeasible product.

### Short introduction to the object of the present invention

This and other aims are achieved by the present invention according to the characteristics as in the appended claims, solving the mentioned problems by means of a process for obtaining a glasses frame or part of said glasses frame, such as a front and/or at least one temple, made up at least of stone material also with a coherent core, and a related glasses frame of composite and stone material, wherein in a processing cycle, for instance of the front, at least the following steps in logical sequence are required:
a) Cutting a section of stone material, having the curvature of the front of the frame;
b) Cutting two elements in the form of rough half-fronts, of which the first element is thicker and a second element is thinner and, constituting the cap, has a constant thickness along all the perimeters;
c) Gluing by means of removable hot glue the thicker first element, above a supporting means of the type having a shaped seat for housing said first element;
d) By means of a first multi-cut workstation, the external face of the first element is milled, bringing it to size;
e) Ungluing, by means of a heat process, the first element from the previous supporting means and regluing on another supporting means, having the same mechanical characteristics as the previous one;
f) Milling by means of a second multi-cut workstation the internal face of the first element, until obtaining a continuous boxed seat of stone material;
g) Inserting, into said boxed seat of said first element, a core of metal or another material intended for the purpose, said metal core having a shape nearly similar but of smaller dimensions with respect to the inside of the box and such as to be accepted inside it, introducing into the box of said first element an epoxy resin so that a suitable distance remains for housing the second element obtained, which constitutes the cap;
h) Thus obtaining a sandwich, the first and second element and the metal core contained inside said first element are pressed, up to the complete drying of the epoxy resin;
i) Once the drying of the epoxy resin has been completed, the exceeding internal part is milled in correspondence of the second element or cap until reaching the designated thickness;
j) Ungluing, by means of a heat process, the front of the so obtained frame, finally carrying out the finishing phases, such as at least smoothing-polishing.
k) Possible carrying out of the same process in the cycle for making the temples and connection of the temples to said front by means of hinging means.

In this way one obtains a glasses frame made up of components like a front and/or temples, each part of which consists of a liner, that is to say, a coating of stone material obtained from a semi-finished block of stone and an inside of composite material integral with said coating, wherein said coating, being aesthetic, is the stone material that is present on the external and internal face of the frame component, while the matrix that cooperates with the reinforcement made up of a core that, along with the epoxy resin, has the purpose of providing rigidity and mechanical resistance, and cooperating between said materials as well, has the purpose of ensuring a certain degree of elasticity, taking a large part of the load on itself.

### Aims

By the considerable creative contribution, the effect of which constitutes an immediate technical progress, various aims and advantages are achieved.

Firstly, the production process allows to obtain a frame made up of a front and temples characterized by great aesthetic impact, we can say total look of stone material, which, by effect of the valuable material machined from solid stone used, makes the product almost unique.

A second aim and advantage consists in obtaining a glasses frame, which is comfortable, of remarkable lightness and therefore easier to be worn, as compared with a frame having the same characteristics but made from the semi-finished block of stone.

An additional aim and advantage consists in obtaining a composite glasses frame, provided with good mechanical resistance and with almost no problems related to the intrinsic fragility of the material, above all if one considers the small thicknesses, which instead remains in a cohesive condition in spite of possible stresses, due to the use of the frame itself.

A further aim and advantage consists in making a composite glasses frame, which feels good to the touch being able to reduce the typical perception of coldness that is usually experienced with stone materials.

Finally, the peculiarity of stone material allows to offer a wide range of colours that is unchanged with respect to the semi-finished block of stone, meeting different customer requirements, with a configuration having a very natural appeal while protecting from the symptoms of contact allergies.

These and other advantages will appear from the following detailed description of some preferred embodiments, with the aid of the schematic drawings enclosed whose details of execution are not to be considered limitative but only illustrative.

### Content of the drawings

Figure 1 is an axonometric view of an exemplary front for a glasses frame, highlighting the section of the front taken in correspondence of one of the two supporting rims of the lenses.
Figure 2 is a schematic view of the processing step a) of the front of a glasses frame.
Figure 3 is a schematic view of the processing step b) of the front of a glasses frame;
Figure 4 is a schematic view of the processing step c) of the front of a glasses frame;
Figure 5 is a schematic view of the processing step d) of the front of a glasses frame;
Figure 6 is a schematic view of the processing step e) of the front of a glasses frame;
Figure 7 is a schematic view of the processing step f) of the front of a glasses frame;
Figure 8 is a view of the front of a glasses frame, from the internal side, that is to say, the side facing the user, with a boxed seat obtained along the perimeter.
Figure 9 is a schematic view of the processing step g) of the front of a glasses frame;
Figure 10 is a schematic view of the processing step h) of the front of a glasses frame;
Figure 11 is a schematic view of the processing step i) of the front of a glasses frame.
Figure 12 is a schematic view of the processing step j) of the front of a glasses frame.

### Practical embodiment of the invention

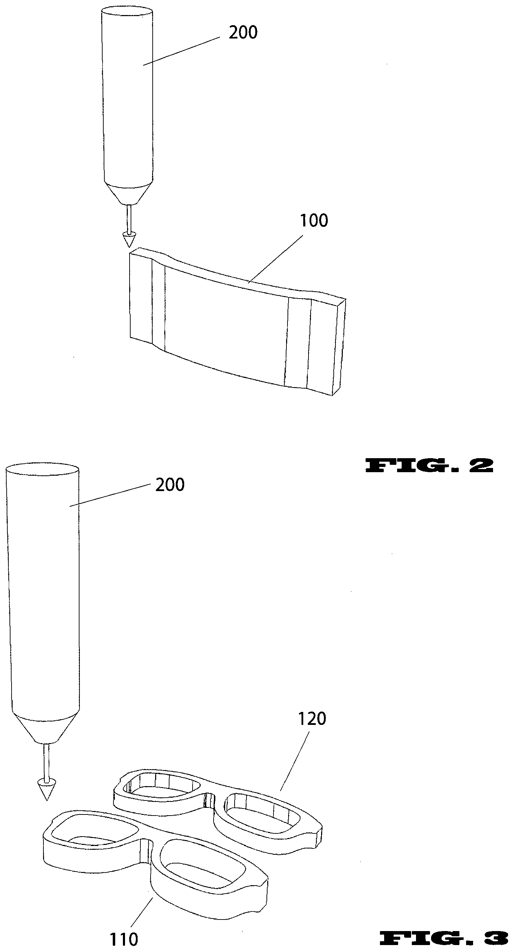

The process according the present invention provides that the processing cycle starts with the making of a component for the glasses frame, in this case to obtain at least one front (10) of a glasses frame, in which first one pre-arranges a block of stone material of small dimensions and in any case such as to consider as included in its three dimensions at least the dimensions of the component to be obtained, said block of material being essentially parallelepiped-shaped, for example of marble material. The following Step a) comprises the cutting from said parallelepiped-shaped block of marble not shown in Figure 2 preferably by means of a cutting technique of the waterjet (200) type, until obtaining two shaped marble slabs (100) of the type shown in Figure 2. In particular said cutting of each marble slab (100) is performed from said parallelepiped-shaped marble block, in such a way as to obtain for each marble slab (100) dimensions that as a whole are at least equal to those of the desired front (10) plus excess material with respect to said dimensions of the front (10) that one wants to obtain, said excess material corresponding to about 1 cm all around. In an alternative embodiment it is sufficient that the second one of said two slabs (100), instead of considering said previously described dimensions, features excess material of about 1 cm, along the perimeter only, in such a way as to include in any case the dimensions of the front, while the thickness can be smaller, that is to say reduced, with respect to that of the first slab (100). Finally, one proceeds with the cutting of each slab (100) in such a way as to give a shape with a desired profile, by means of the cutting tool, until defining the curve of the front (10) of the glasses frame, and emptying a part of it that will comprise the rims (11, 12) supporting the lenses and the connecting bridge (13) between said two rims (11, 12).

The following Step b), represented by Figure 3, requires the cutting, always by means of the cutting technique of the waterjet (200) type, from each slab (100), in a horizontal position, of a rough half-front (110, 120), wherein the first half-front (110) is thicker than the second one (120) which is obtained in offset by about 0.50mm along all the perimeters. Naturally each rough half-front (110, 120) has a shape similar to that of the front (10), including the rims (11, 12) supporting the lenses and the connecting bridge (13) between said two rims (11, 12). In this way the shape of the second rough half-front (120) is cut on the rough half-front (110) previously cut with the curve, in order to have a piece very similar to the finished front (10) as far as the dimensions are concerned. Still and in this case, each rough half-front (110, 120) will have slightly different shapes, since a rough half-front (120) constitutes the cap and the other one (110) is the external part that will then have to be closed by said rough half front/cap (120, 115).

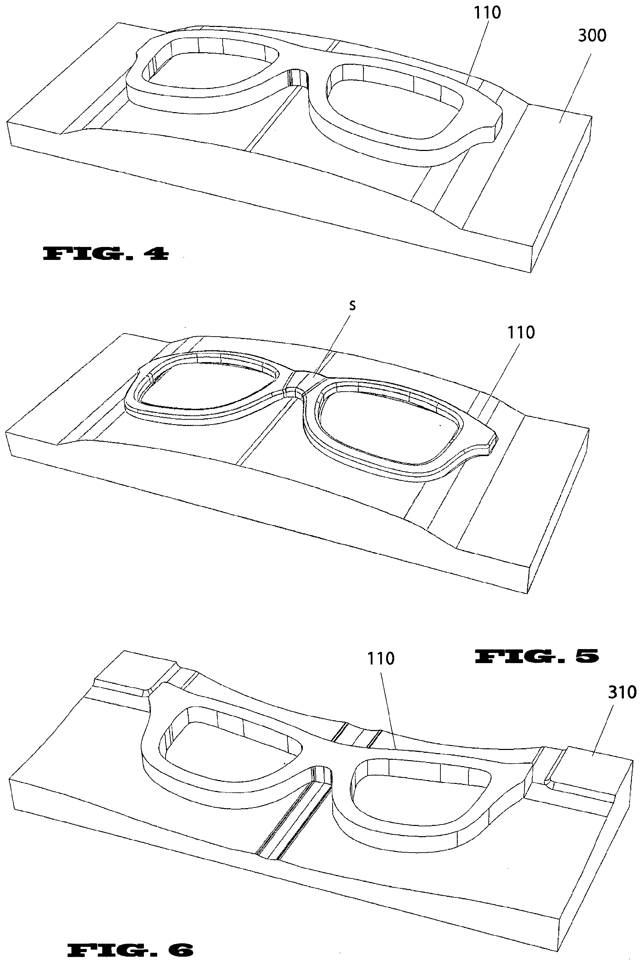

Afterwards, Step c) provides the gluing, by means of reversible glue, of said thicker rough half-front (110), above an equipment (300) Figure 4, in the form of an aluminium mould that comprises a shaped seat such as to house said rough half-front (110) in an overhanging way. The orientation of the thicker rough half-front (110) glued on the equipment (300) is such as to have the convex extrados facing the operator.

Afterwards, Step d) provides the processing of the thicker rough half-front (110), by means of a multi-cut workstation, which mills the external surface or external face (s) of the model of rough half-front (110), bringing it to size, Figure 5.

Afterwards, Step e) requires the ungluing, by means of a heat process, of the rough half-front (110) from the equipment (300) and its regluing overturned by 180°, thus with the concave intrados of the rough half-front (110) facing the operator, on other equipment (310) having the same characteristics as the previous one, thus likewise provided with a shaped seat for housing the profile of said rough half-front (110), Figure 6.

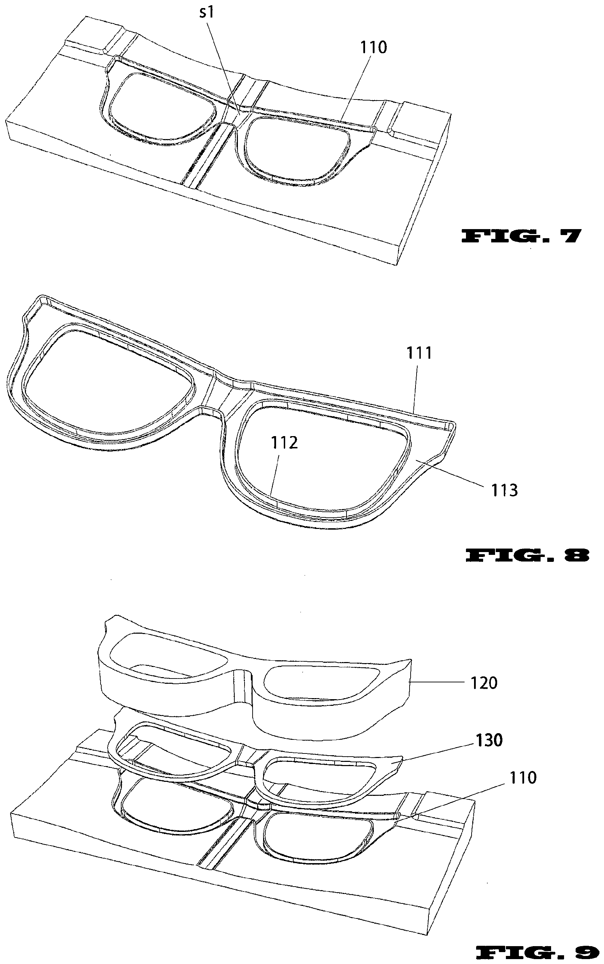

In the following, Step f) requires the processing of the thicker rough half-front (110) from the internal side (s1) by means of a multi-cut workstation, which mills the internal surface or internal face (s1) of the model of rough half-front (110), in such a way as to obtain a profile with a boxed seat (113) from solid marble, with walls (111, 112) having a thickness of about 0.50 mm, Figure 7. In this Step f) it is important to point out that the half-front (110), at the end of the milling process, remains almost enclosed inside the shaped seat, not shown, of the equipment or mould (310) in such a way that the height of its edge does not exceed said shaped seat. This has the purpose of preventing in the following steps the collapse of the walls (111, 112) towards which a pressure is exerted that may cause them to collapse. Figure 8 is an example of a model of half-front (110), with the boxed seat (113) having a mainly "U"-shaped section and, when seen from the top from the internal side of the half-front (110), being defined by the wall (111) that delimits the perimeter of the half-front (110) while the internal walls (112) cooperating with the perimeter wall (111) delimit each rim (11, 12).

In the following, Step g) requires first the fact of having processed the second rough half-front (120), gluing it by means of reversible glue on special equipment, to bring it to size, in such a way that it fits, with a tolerance of about 0.1mm, into the boxed seat (113) hollowed as in Step f) on the lower surface (s1) of the half-front (110). At the same time one also has to prearrange a core (130), preferably of metal or another material suitable for the purpose, for example of composite material, wherein said metal core (130) is made of titanium material having a thickness of about 1 mm, well cleaned. The shape of said core (130) is cut and bent so that it can perfectly enter the housing, that is to say, the boxed seat (113) of the half-front (110). In a possible embodiment said metal core (130) can also have a perforated surface, which on the one hand increases its lightness and can be made in such a way as to best distribute axial stresses. Moreover, the fact that it is perforated provides, once it has been introduced into the boxed seat (113) of the half-front (110) and once the resin has been cast, a more uniform distribution in such a way as to stabilize the whole assembly more effectively. At this point, in a first embodiment, without ungluing the half-front (110) from the supporting equipment (310) an epoxy resin (140) is first cast inside said boxed seat (113) of the half-front (110), then one inserts, by embedding it, the core (130) of titanium, to then fit, by pushing on it, the half-front (120) constituting in this phase the machined cap (115), so that it enters said boxed seat (113) of the half-front (110) by about 0.5mm ± 0.2mm. In a second embodiment the metal core (130) is simply inserted into the boxed seat (113) of the half-front (110) to then impregnate the whole assembly with epoxy resin (140), and then introduce the half-front (120)/machined cap (115) to close the sandwich.

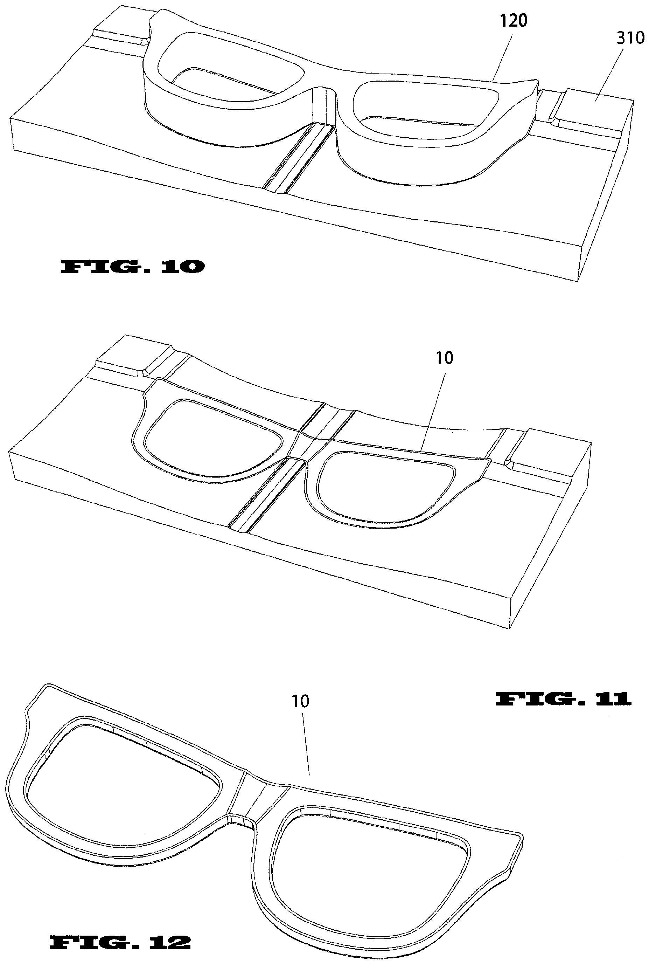

In the following Step h) the sandwich obtained in Step g) is finally entirely locked with two clamps, or related press in such a way as to have a homogenous pressure over the entire surface, which obviously will then be pressed and held together until the end of the solidification reaction, Figures 9 and 10, thus obtaining the rough front (10).

Afterwards, Step i) requires the removal of the exceeding material from the rough front (10), Figures 11 and 12, by milling in correspondence of the concave intrados of said front (10) until bringing the semi-finished product to the desired thickness. Then one will pass to Step j) that concludes the cycle for making the front (10), providing the ungluing, by means of a heat process, of said front (10) from the respective supporting equipment (310) to be subjected to a finishing step, for example manual, which comprises smoothing and polishing.

An identical processing cycle as in said Steps a)-j) is followed in the making of the single temples, respectively right and left, which make up a glasses frame to then join the respective hinges that will enable the hinging of said temples to the front (10).

In a variant of the above-described manufacturing process, Steps c) and e) can also be inverted, consequently adapting the respective following and consequential processing steps of said element.

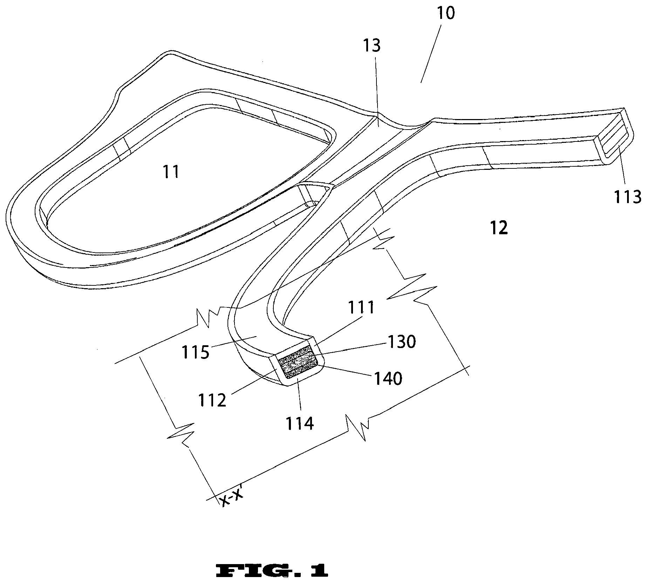

At the end of the above-described processing cycle the front (10) of the glasses frame, made of stone material, for example of marble material, Figure 1, comprises the rims (11, 12) supporting the lenses and the connecting bridge (13) between said two rims (11, 12). The section, made for example in correspondence of one of the two rims (11, 12), that is to say, in correspondence of the section (x-x') on the plane transverse to the centreline of the rim, in this case of the rim (12), is such as to provide the configuration of the boxed seat (113) that substantially recalls a "U" shape defined by the walls (111, 112) and a bottom (114), with inside the layered composition of material joined in Step g) consisting of the epoxy resin (140) in which the metal core (130) is embedded, also of the reticulated and/or perforated type that can be also made of other materials, such as carbon, kevlar. In more detail, the section on the plane transverse to the centreline of the rim (x-x') comprises said boxed seat (113) with a "U" shape defined by the walls (111, 112), a bottom (114) and a cap or cover (115), with inside said layered composition of material consisting of the epoxy resin (140) in which the core (130) is at least partially embedded, said walls (111, 112) and the bottom (114) being obtained from a single block of stone material from which said half-front (110) is obtained, and wherein said cover/cap (115), being obtained from a block of stone material from which said half-front (120) is obtained, is introduced and enclosed inside said seat (113) parallel with respect to the bottom (114) in such a way as to be coplanar, that is to say, level, with respect to the upper edge of said walls (111, 112).

### Reference:

(10) front
(11, 12) rims
(13) connecting bridge
(100) marble slab
(111, 112) walls
(114) bottom
(113) boxed seat
(110) half-front
(120) half-front
(115) cap
(130) core
(140) epoxy resin
(200) means for cutting the stone material, i.e. waterjet
(300) first supporting equipment
(310) second supporting equipment
(s) external face or surface of the half-front (110)
(s1) internal face or surface of the half-front (110)

## Claims

1. Process for obtaining at least one component of a glasses frame, such as a front (10) and/or a temple with at least one part of stone material, **characterised in that** the processing cycle requires at least the following steps in logical sequence:
a) Cutting a section of stone material, in such a way as to obtain at least one slab (100) having the curvature of the component (10) of the frame;
b) Cutting from at least one slab (100) two elements (110, 120) in the form of rough components, of which the first element (110) is thicker and a thinner second element (120) that, constituting the cap or cover, has a constant thickness along all the perimeters;
c) Gluing the thicker first element (110) above a supporting means (300) and at least partially within a corresponding shaped seat for housing said first element (110);
d) By means of a multi-cut workstation the external face (s) of said first element is milled, (110) bringing it to size;
e) Ungluing said first element (110) from the supporting means (300) and regluing said first element (110) overturned on another supporting means (310) and within a shaped seat for housing said first element (110);
f) Milling by means of a multi-cut workstation the internal face (s1) of said first element (110), until obtaining a boxed seat (113) of stone material;
g) Inserting, into said boxed seat (113) of said first element (110), a metal core (130) or core of another material having a shape almost similar to the inside of the boxed seat (113) and such as to be accepted inside it, introducing into the boxed seat (113) of said first element (110) an epoxy resin (140) so that a suitable distance remains for housing the second element obtained, which constitutes the cap (115);
h) Thus obtaining a sandwich (110, 130, 140, 120), said assembly (110, 130, 140, 120) is pressed up to the complete drying of the epoxy resin (140), obtaining the rough component (10);
i) Once the drying of the epoxy resin (140) has been completed, the component (10) is then milled in correspondence of the exceeding internal part, until reaching the designated thickness;
j) Ungluing said component (10) so obtained, finally carrying out the finishing steps, such as at least polishing-smoothing.

2. Process for obtaining at least one component of a glasses frame, such as a front and/or a temple with at least one part of stone material, according to claim 1, **characterised in that** in Step f) the thicker element (110) is machined on the internal side (s1) by means of a multi-cut workstation, which mills the internal surface or internal face (s1) of the element (110), in such a way as to obtain a profile with a boxed seat (113) having a "U"-shaped section from solid marble, with walls (111, 112) having a thickness of about 0.50 mm ± 0.20mm, and wherein the element (110), at the end of the milling process, remains nearly enclosed inside the shaped seat of the equipment or mould (310) in such a way as to arrange the edge of the walls (111, 112) so that its height does not exceed said shaped seat of the mould (310).

3. Process for obtaining at least one component of a glasses frame, such as a front and/or a temple with at least one part of stone material, according to claim 1 and 2, **characterised in that** in Step g) without ungluing the element (110) from the supporting equipment (310), an epoxy resin (140) is first cast inside said boxed seat (113) of the element (110), then one inserts, by embedding it, the core (130), to then fit, by pushing on it, the closing element (120) constituting the machined cap, so that it enters said boxed seat (113) of the element (110) by about 0.5mm ± 0.2mm.

4. Process for obtaining at least one component of a glasses frame, such as a front and/or a temple with at least one part of stone material, according to claim 1 and 2, **characterised in that** in Step g) without ungluing the element (110) from the supporting equipment (310), the metal core (130) is inserted into the boxed seat (113) of the element (110) to then impregnate the whole assembly with epoxy resin, and then introduce the element (120) closing the sandwich, so that it enters said boxed seat (113) of the element (110) by about 0.5mm ± 0.2mm.

5. Glasses frame of composite material, with at least one front (10) of the glasses frame that comprises the rims (11, 12) supporting the lenses and the connecting bridge (13) between said two rims (11, 12), wherein the section (x-x') on the plane transverse to the centreline of the rim (11, 12) comprises a boxed seat (113) that substantially recalls a "U" shape defined by the walls (111, 112), a bottom (114) and a cover (115), with inside the layered composition of material consisting of the epoxy resin (140) in which the core (130) is at least partially embedded, said walls (111, 112) and the bottom (114) being obtained from one single block of stone material (110), and wherein the cover (115), being obtained from a block of stone material (120), is introduced and enclosed inside said seat (113) parallel with respect to the bottom (114) in such a way as to be coplanar with respect to the upper edge of said walls (111, 112).

6. Glasses frame of composite material, with at least one front (10) of the glasses frame that comprises the rims (11, 12) supporting the lenses and the connecting bridge (13) between said two rims (11, 12), according to claim 5, **characterised in that** the core (130) of reduced thickness is shaped as a front (10), and is perforated.

7. Glasses frame of composite material, with at least one front (10), according to claims 5 and 6, and with a pair of temples hinged to said front (10), **characterised in that** each temple with respect to the section on the transverse plane comprises a boxed seat (113) that recalls a "U" shape defined by the walls (111, 112), a bottom (114) and a cover (115), with inside the layered composition of material consisting of the epoxy resin (140) in which the core (130) is at least partially embedded, said walls (111, 112) and the bottom (114) being obtained from one single block of stone material from which said half-front (110) is obtained, and wherein the cover/cap (115), being obtained from a block of stone material from which said half-front (120) is obtained, is introduced and enclosed inside said seat (113) parallel with respect to the bottom (114) in such a way as to be coplanar with respect to the upper edge of said walls (111, 112).

## Patentansprüche

1. Verfahren zur Herstellung mindestens einer Komponente eines Brillengestells, wie einer Front (10) und/oder eines Bügels, mit mindestens einem Teil aus Steinmaterial, **dadurch gekennzeichnet, dass** der Verarbeitungszyklus mindestens die folgenden Schritte in logischer Reihenfolge erfordert:
a) Schneiden eines Abschnitts aus Steinmaterial derart, dass mindestens eine Platte (100) mit der Krümmung der Komponente (10) des Rahmens hergestellt wird;
b) Schneiden von zwei Elementen (110, 120) in Form von rauen Bauteilen aus mindestens einer Platte (100), von denen das erste Element (110) dicker ist und ein dünneres zweites Element (120) die Kappe oder Abdeckung bildet, eine konstante Dicke entlang aller Umfänge hat;
c) Kleben des dickeren ersten Elements (110) über ein Tragmittel (300) und zumindest teilweise innerhalb eines entsprechend gestalteten Sitzes zum Aufnehmen des besagten ersten Elements (110);
d) Mittels einer Mehrfachschnitt-Arbeitsstation werden die Außenflächen des besagten ersten Elements gefräst (110), um es auf eine Größe zu bringen;
e) Lösen des besagten ersten Elements (110) von der Stützeinrichtung (300) und erneutes Kleben des besagten ersten Elements (110), umgedreht auf einer anderen Stützeinrichtung (310) und innerhalb eines geformten Sitzes zum Aufnehmen des besagten ersten Elements (110);
f) Fräsen der Innenseite (s1) des besagten ersten Elements (110) mittels einer Mehrfachschnitt-Arbeitsstation, bis ein Kastensitz (113) aus Steinmaterial hergestellt wird;
g) Einsetzen eines Metallkerns (130) oder eines Kerns aus einem anderen Material in den besagten Kastensitz (113) des besagten ersten Elements (110), dessen Form der Innenseite des Kastensitzes (113) nahezu ähnlich ist und um darin aufgenommen zu werden, Einbringen eines Epoxidharzes (140) in den Kastensitz (113) des besagten ersten Elements (110), so dass ein geeigneter Abstand verbleibt, um das hergestellte zweite Element aufzunehmen, das die Kappe (115) bildet;
h) So stellt man ein Sandwich her (110, 130, 140, 120), wobei die besagte Anordnung (110, 130, 140, 120) bis zum vollständigen Trocknen des Epoxidharzes (140) gepresst wird, wodurch die raue Komponente (10) hergestellt wird;
i) Sobald das Trocknen des Epoxidharzes (140) abgeschlossen ist, wird das Bauteil (10) entsprechend dem überstehenden Innenteil gefräst, bis die angegebene Dicke erreicht ist;
j) Lösen des so hergestellten besagten Bauteils (10) und abschließendes Ausführen der Endbearbeitungsschritte, wie zumindest Polieren und Glätten.

2. Verfahren zur Herstellung mindestens einer Komponente eines Brillengestells, wie einer Front und/oder eines Bügels, mit mindestens einem Teil aus Steinmaterial nach Anspruch 1, **dadurch gekennzeichnet, dass** in Schritt f) das dickere Element (110) auf der Innenseite (s1) mittels einer Mehrfachschnitt-Arbeitsstation bearbeitet wird, die die Innenfläche oder Innenseite (s1) des Elements (110) fräst, so dass ein Profil mit einem Kastensitz (113) mit einem "U"-förmigen Querschnitt aus massivem Marmor mit Wänden (111, 112) mit einer Dicke von etwa 0,50 mm ± 0,20 mm hergestellt wird, und wobei das Element (110) am Ende des Fräsvorgangs nahezu innerhalb des geformten Sitzes der Einrichtung oder Gussform (310) eingeschlossen bleibt, so dass der Rand der Wände (111, 112) so angeordnet wird, dass seine Höhe den besagten geformten Sitz der Gussform (310) nicht überschreitet.

3. Verfahren zur Herstellung mindestens einer Komponente eines Brillengestells, wie einer Front und/oder eines Bügels, mit mindestens einem Teil aus Steinmaterial, nach Anspruch 1 und 2, **dadurch gekennzeichnet, dass** in Schritt g), ohne das Element (110) von der Trageinrichtung (310) zu lösen, zuerst ein Epoxidharz (140) in den besagten Kastensitz (113) des Elements (110) eingebettet wird, dann wird durch Einbetten des Kerns (130) das die bearbeitete Kappe bildende Verschlusselement (120) eingesetzt, um darauf zu drücken, so dass es in den besagten Kastensitz (113) des Elements (110) um etwa 0,5 mm ± 0,2 mm eintritt.

4. Verfahren zur Herstellung mindestens einer Komponente eines Brillengestells, wie einer Front und/oder eines Bügels, mit mindestens einem Teil aus Steinmaterial nach Anspruch 1 und 2, **dadurch gekennzeichnet, dass** in Schritt g) der Metallkern (130) in den Kastensitz (113) des Elements (110) eingeführt wird, ohne das Element (110) von der Trageinrichtung (310) zu lösen, um dann die gesamte Baugruppe mit Epoxidharz zu imprägnieren, und dann das Element (120) einzuführen, das das Sandwich verschließt, so dass es in den Kastensitz (113) des Elements (110) um etwa 0,5 mm ± 0,2 mm eintritt.

5. Brillengestell aus Verbundmaterial, wobei mindestens eine Vorderseite (10) des Brillengestells die die Linsen tragenden Ränder (11, 12) und die Verbindungsbrücke (13) zwischen den besagten beiden Rändern (11, 12) aufweist, wobei der Abschnitt (x-x') in der Ebene quer zur Mittellinie der Ränder (11, 12) einen Kastensitz (113) aufweist, der im Wesentlichen an eine "U"-Form erinnert, die durch die Wände (111, 112), einen Boden (114) und eine Abdeckung (115) definiert ist, wobei die geschichtete Materialzusammensetzung aus dem Epoxidharz (140) besteht, bei dem der Kern (130) zumindest teilweise eingebettet wird, wobei die besagten Wände (111, 112) und der Boden (114) aus einem einzigen Steinmaterialblock (110) bestehen, und wobei die Abdeckung (115), die aus einem Steinmaterialblock (120) hergestellt wird in Bezug auf den Boden (114) derart parallel in den besagten Sitz (113) eingeführt und eingeschlossen wird, dass sie in Bezug auf die Oberkante der besagten Wände (111, 112) koplanar ist.

6. Brillengestell aus Verbundmaterial mit mindestens einer Vorderseite (10) des Brillengestells, die die Linsen tragenden Ränder (11, 12) und die Verbindungsbrücke (13) zwischen den besagten beiden Rändern (11, 12) aufweist, nach Anspruch 5, **dadurch gekennzeichnet, dass** der Kern (130) mit verringerter Dicke als eine Vorderseite (10) geformt und perforiert ist.

7. Brillengestell aus Verbundmaterial mit mindestens einer Vorderseite (10) nach den Ansprüchen 5 und 6, und mit einem Paar Bügeln, die an der Vorderseite (10) angelenkt sind, **dadurch gekennzeichnet, dass** jeder Bügel in Bezug auf den Querschnitt in der Querebene einen Kastensitz (113) umfasst, der an eine "U"-Form erinnert, die durch die Wände (111, 112), einen Boden (114) und eine Abdeckung (115) definiert ist, wobei die geschichtete Materialzusammensetzung aus dem Epoxidharz (140) besteht, bei dem der Kern (130) zumindest teilweise eingebettet wird, wobei die besagten Wände (111, 112) und der Boden (114) aus einem einzigen Steinmaterialblock hergestellt werden, aus dem die besagte Halbfront (110) hergestellt wird, und wobei die Abdeckung/Kappe (115), die aus einem Steinmaterialblock hergestellt wird, aus dem die besagte Halbfront (120) hergestellt wird, in Bezug auf den Boden (114) derart parallel in den besagten Sitz (113) eingeführt und eingeschlossen wird, dass sie in Bezug auf die Oberkante der besagten Wände (111, 112) koplanar ist.

## Revendications

1. Processus pour obtenir au moins un composant d'une monture de lunettes, comme une face (10) et/ou une branche avec au moins une partie de matériel de pierre, **caractérisé en ce que** le cycle de traitement exige au moins les phases suivantes dans une séquence logique :
a) Couper une section de matériel de pierre, de façon à obtenir au moins une dalle (100) ayant la courbure du composant (10) de la monture ;
b) Couper d'au moins une dalle (100) deux éléments (110, 120) sous la forme de composants bruts, dont le premier élément (110) est plus épais et un deuxième élément plus mince (120) qui, constituant le bouchon ou couverture, a une épaisseur constante le long de tous les périmètres ;
c) Coller le premier élément plus épais (110) au-dessus d'un moyen de support (300) et au moins partiellement à l'intérieur d'un logement façonné correspondant pour accueillir ledit premier élément (110) ;
d) Au moyen d'un poste de travail multi-coupe la face externe (s) dudit premier élément est fraisée, (110) le dimensionnant ;
e) Décoller ledit premier élément (110) du moyen de support (300) et recoller ledit premier élément (110) renversé sur un autre moyen de support (310) et à l'intérieur d'un logement façonné pour accueillir ledit premier élément (110) ;
f) Fraiser au moyen d'un poste de travail multi-coupe la face interne (s1) dudit premier élément (110), jusqu'à obtenir un logement en forme de boîte (113) de matériel de pierre ;
g) Insérer, dans ledit logement en forme de boîte (113) dudit premier élément (110), une âme métallique (130) ou âme d'un autre matériel ayant une forme presque similaire à l'intérieur du logement en forme de boîte (113) et de façon à être accueillie dans cela, introduisant dans le logement en forme de boîte (113) dudit premier élément (110) une résine époxydique (140) de façon qu'une distance appropriée reste pour accueillir ledit deuxième élément obtenu, qui constitue le bouchon (115) ;
h) Obtenant ainsi un sandwich (110, 130, 140, 120), ledit ensemble (110, 130, 140, 120) est pressé jusqu'au séchage complet de la résine époxydique (140), obtenant le composant brut (10) ;
i) Une fois le séchage de la résine époxydique (140) complété, le composant (10) est ensuite fraisé au niveau de la partie interne excédante, jusqu'à atteindre l'épaisseur désignée ;
j) Décoller ledit composant (10) ainsi obtenu, réalisant enfin les phases de finition, comme au moins le polissage-lissage.

2. Processus pour obtenir au moins un composant d'une monture de lunettes, comme une face et/ou une branche avec au moins une partie de matériel de pierre, selon la revendication 1, **caractérisé en ce que** dans la Phase f) l'élément le plus épais (110) est usiné sur le côté interne (s1) au moyen d'un poste de travail multi-coupe, qui fraise la surface interne ou face interne (s1) de l'élément (110), de façon à obtenir un profil avec un logement en forme de boîte (113) ayant une section en forme de "U" de marbre solide, avec des parois (111, 112) ayant une épaisseur d'environ 0,50 mm ± 0,20mm, et où l'élément (110), à la fin du procédé de fraisage, reste presque renfermé à l'intérieur du logement façonné de l'appareillage ou moule (310) de façon à arranger le bord des parois (111, 112) de façon que sa hauteur n'excède pas ledit logement façonné du moule (310).

3. Processus pour obtenir au moins un composant d'une monture de lunettes, comme une face et/ou une branche avec au moins une partie de matériel de pierre, selon la revendication 1 et 2, **caractérisé en ce que** dans la Phase g) sans décoller l'élément (110) de l'appareillage de support (310), une résine époxydique (140) est d'abord coulée dans ledit logement en forme de boîte (113) de l'élément (110), ensuite l'on insère, par incorporation, l'âme (130), et ensuite l'on adapte l'élément de fermeture (120) constituant le bouchon usiné, par pression sur cela, de façon qu'il entre dans ledit logement en forme de boîte (113) de l'élément (110) d'environ 0,5mm ± 0,2mm.

4. Processus pour obtenir au moins un composant d'une monture de lunettes, comme une face et/ou une branche avec au moins une partie de matériel de pierre, selon la revendication 1 et 2, **caractérisé en ce que** dans la Phase g) sans décoller l'élément (110) de l'appareillage de support (310), l'âme métallique (130) est insérée dans le logement en forme de boîte (113) de l'élément (110) et ensuite l'on imprègne l'ensemble entier avec de la résine époxydique, et ensuite l'on introduit l'élément (120) fermant le sandwich, de façon qu'il entre dans ledit logement en forme de boîte (113) de l'élément (110) d'environ 0,5mm ± 0,2mm.

5. Monture de lunettes de matériel composite, avec au moins une face (10) de la monture de lunettes qui comprend les cercles (11, 12) supportant les verres et le pont de liaison (13) entre lesdits deux cercles (11, 12), où la section (x-x') sur le plan transversal à la ligne médiane du cercle (11, 12) comprend un logement en forme de boîte (113) qui rappelle substantiellement une forme de "U" définie par les parois (111, 112), un fond (114) et une couverture (115), avec à l'intérieur la composition stratifiée de matériel consistant en la résine époxydique (140) où l'âme (130) est au moins partiellement incorporée, lesdites parois (111, 112) et le fond (114) étant obtenus à partir d'un seul bloc de matériel de pierre (110), et où la couverture (115), étant obtenue à partir d'un bloc de matériel de pierre (120), est introduite et renfermée à l'intérieur dudit logement (113) parallèle par rapport au fond (114) de façon à être coplanaire par rapport au bord supérieur desdites parois (111, 112).

6. Monture de lunettes de matériel composite, avec au moins une face (10) de la monture de lunettes qui comprend les cercles (11,12) supportant les verres et le pont de liaison (13) entre lesdits deux cercles (11, 12), selon la revendication 5, **caractérisée en ce que** l'âme (130) à épaisseur réduite est façonnée comme une face (10), et est perforée.

7. Monture de lunettes de matériel composite, avec au moins une face (10), selon les revendications 5 et 6, et avec une paire de branches articulées à ladite face (10), **caractérisée en ce que** chaque branche par rapport à la section sur le plan transversal comprend un logement en forme de boîte (113) qui rappelle une forme de "U" définie par les parois (111, 112), un fond (114) et une couverture (115), avec à l'intérieur la composition stratifiée de matériel consistant en la résine époxydique (140) où l'âme (130) est au moins partiellement incorporée, lesdites parois (111, 112) et le fond (114) étant obtenus à partir d'un seul bloc de matériel de pierre à partir duquel ladite semi-face (110) est obtenue, et où la couverture/bouchon (115), étant obtenue à partir d'un bloc de matériel de pierre à partir duquel ladite semi-face (120) est obtenue, est introduite et renfermée à l'intérieur dudit logement (113) parallèle par rapport au fond (114) de façon à être coplanaire par rapport au bord supérieur desdites parois (111, 112).
